# EUROPÄISCHE PATENTSCHRIFT

(11) **EP 0 413 882 B1**
(45) Veröffentlichungstag und Bekanntmachung des Hinweises auf die Patenterteilung: **09.11.1994**
(21) Anmeldenummer: 89890218.4
(22) Anmeldetag: 24.08.1989
(51) Int. Cl.: B01D 53/00

(54) **Filterboden für eine Biofilteranlage**
Filter bottom for a biofilter plant
Fond d'un filtre pour une installation de filtration biologique

(43) Veröffentlichungstag der Anmeldung: 27.02.1991
(73) Patentinhaber: Fleischhacker, Gerhard, Dr. Dipl.-Ing., A-9330 Treibach (AT)
(72) Erfinder: Fleischhacker, Gerhard, Dr. Dipl.-Ing., A-9330 Treibach (AT)
(74) Vertreter: Holzer, Walter, Dipl.-Ing.

(56) Entgegenhaltungen:
- EP-A- 0 184 085
- DE-A- 3 309 496
- DE-A- 3 417 059
- GESUNDHEITS-INGENIEUR, Band 95, Nr.1, 1974, MUENCHEN (DE), Seiten 21 - 26; R.HELMER: "DESODORIERUNG VON GERUCHSBELADENER ABLUFT IN BODENFILTERN"

## Beschreibung

Die Erfindung betrifft einen Filterboden für eine Biofilteranlage, der aus einer Mehrzahl von eine geschlossene Bodenfläche bildenden und von einer Tragkonstruktion abgestützten gasdurchlässigen Bodenelementen zusammengesetzt ist.

Zur Reinigung von mit Geruchs- oder Schadstoffen beladenen Abgasen, insbesondere Ablüften, werden in zunehmendem Ausmaß biologische Filter, kurz Biofilter genannt, verwendet. Bei diesem Reinigungsverfahren wird das Rohgas durch eine biologisch aktive Stoffe enthaltende Filtermasse geleitet, die von einem gasdurchlässigen Filterboden abgestützt wird und die Geruchs- oder Schadstoffe im Rohgas abbauende Mikroorganismen enthält. Durch entsprechende Dimensionierung des Biofilters kann dieser Abbau unter bestimmten Voraussetzungen auf einen tolerierbaren Restwert gesichert werden.

Die EP-A-0 184 085 beschreibt ein Filterbett zum Trennen großer Mengen Wasser von granulierter Hochofenschlacke mit Hilfe von Filtermassen, die aus übereinandergeschichteten Kiesschichten unterschiedlicher Korngrößen bestehen. Das Filterbett weist im wesentlichen einen Aufbau der einleitend genannten Art auf und besteht insbesondere aus einer Mehrzahl von allseitig geschlossenen Kästen aus gelochtem Stahlblech, in welchen das Kiesmaterial enthalten ist. Diese Filterkästen werden in Mehrzahl zu einer geschlossenen Bodenfläche verlegt, u.zw. indem sie in einen horizontal liegenden massiven Stahlträgerrost eingesetzt werden. Jeder Filterkasten besitzt einen aus gelochten Blechen aufgebauten Kastenboden, der mittels eines grobmaschigen Netzes aus Flacheisen verstärkt ist. Dieser Aufbau ist konstruktiv aufwendig und nur für schwere und umfangreiche Filtermassen rentabel.

Die Funktion eines Biofilters ist abhängig von
- der Zusammensetzung des zu reinigenden Rohgases, der Feuchtigkeit und der Temperatur,
- der Verteilung des Rohgases vor Eintritt in die biochemische Filtermasse,
- der Zusammensetzung der verwendeten Filtermasse und seiner chemischen und physikalischen Parameter, wie Korngröße oder Krümmelstruktur usw.,
- der Schichtdicke der Filtermasse und
- der Verweilzeit des Rohgases im Filter.

Im Falle der biologischen Abluftreinigung, die ein Hauptanwendungsgebiet der Biofilter darstellt, müssen die Geruchsstoffe in der zur Verfügung stehenden Kontaktzeit (Verweilzeit) mit der Biomasse von den Mikroorganismen in einem biochemischen Prozeß umgesetzt und abgebaut werden.

Selbst wenn angenommen wird, daß die nach der VDI 3881 definierten Geruchskonzentrationen im Abluftstrom ein Vielfaches der Störschwelle (30 bis 70 GE/m³) erreichen können, kann nach Durchströmen eines entsprechend dimensionierten Biofilters die Geruchskonzentration unter diese Störschwelle abgemindert werden.

Die für die Wirksamkeit der biologischen Abluftreinigung entscheidenden Stoffübergangs- und Abbauvorgänge bedingen in Abhängigkeit vom zu reinigenden Rohgas eine genau definierte konstruktive Ausführung des Biofilters.

Voraussetzung für den Einsatz eines Biofilters ist die Anwendbarkeit eines biologischen Abluftreinigungsverfahrens, die durch Tests geklärt werden kann. Zunächst sollen Abluftmenge, Ablufttemperatur und Feuchtigkeit festgestellt werden. Auch eine Abluftanalyse - vor allem zur Feststellung des BSB-Wertes (Biochemischer Sauerstoffbedarf) kann durchgeführt werden; auf diese kann verzichtet werden, wenn es sich um Abluft aus landwirtschaftlichen oder ähnlichen Bereichen, z.B. Selchereien, Tierkörperverwertungen usw. handelt. Wenn es sich nach diesen Kriterien um biologisch abbaubare Rohgase handelt, kann ein Biofilter zur Anwendung kommen.

Für die Herstellung bzw. Errichtung eines geeigneten Biofilters sind bisher umfangreiche bauliche Maßnahmen notwendig gewesen. Entweder werden Baugruben oder Betonwannen mit in situ gefertigten Filterböden entsprechender Größe hergestellt, oder es wird mit transportablen Containern in Stahlblechausführung ein Filterbauwerk gewünschter Größe errichtet.

Aus der DE-A-34 17 059 ist anderseits ein an einer Tragkonstruktion abgestützter Filtarboden der einleitend angegebenen Art bekannt, der als Gitterrost ausgebildet ist und infolge der Abstützung aus mehreren Teilen bestehen kann, wodurch die Handhabung und der Einbau erleichtert werden.

Die vorliegende Erfindung befaßt sich nun mit der Aufgabe, zur Verminderung der Kosten von Biofilteranlagen einen Filterboden zu schaffen, der wirtschaftlich herstellbar, leicht an verschieden große Biofilteranlagen anpaßbar und zugleich vom durchströmenden Gas gleichmäßig durchsetzbar ist, wobei er überdies für Reinigungszwecke hinreichend tragfähig und gegebenenfalls befahrbar sein muß.

Diese Aufgabe ist bei einem erfindungsgemäßen Filterboden dadurch gelöst, daß die Bodenelemente aus rahmenartigen, bodenlosen, gegebenenfalls mit einer Stahlarmierung versehenen, unporösen Stütz- und Hüllkörpern aus Beton oder Kunststoff bestehen, deren Rahmenöffnungen in Richtung senkrecht zum Filterboden von oben nach unten verjüngt sind und poröses Material, wie Sickerbeton oder porösen Kunststoff, in Anlage umgeben und festhalten.

Bei erfindungsgemäßen Bodenelementen durchströmt das Gas die willkürlich gerichteten Hohlräume, die zwischen den Körnern bzw. dem Skelett des gasdurchlässigen Materials gebildet werden, und tritt willkürlich bzw. diffus verteilt in die Filtermasse ein, wodurch bei gleichem Gasdurchsatz die Strömungsgeschwindigkeit vermindert und in weiterer Folge die Entwicklung von Mikroorganismen begünstigt wird. Durch die Einrahmung der porösen Masse wird vor allem die erforderliche Festigkeit der Bodenelemente gesichert. Auf Grund der Konizität der Rahmenöffnungen kann das poröse Material einerseits leicht in die Stütz- und Hüllkörper eingebracht werden und anderseits wird es von diesen gut abgestützt. Schließlich wird durch die Erfindung gewährleistet, daß der Filterboden zu Reinigungszwecken von entsprechend ausgebildeten Reinigungsfahrzeugen befahren werden kann.

Die Bodenelemente eines solchen Filterbodens können in gleicher, den Transportbedingungen angepaßter Größe massengefertigt und in einer der Größe der zu errichtenden Biofilteranlage entsprechenden Anzahl zur Baustelle befördert werden. Durch die regelmäßige Zusammensetzung der Bauelemente des Filterbodens wird erreicht, daß dieser bei geringerem Druckabfall eine möglichst gleichmäßige Verteilung des Rohgases gewährleistet. Für Wartungs- und Reinigungszwecke können die einzelnen Bodenelemente auch einzeln abgenommen und wieder eingesetzt bzw. auch ersetzt werden.

Die Umrißlinie der einzelnen Bodenelemente ist am einfachsten rechteckig oder quadratisch, doch können auch andere, lückenlos zu einer Bodenfläche zusammensetzbare Elemente angewendet werden, etwa regelmäßige Sechseck-Elemente oder auch krummlinig begrenzte Elemente, wie sie für Kachelböden verwendet werden. Diese Bodenelemente werden jeweils längs Stoßfugen oder Stoßfugenzonen auf der Tragkonstruktion, vorzugsweise aus Stahl- oder Betonträgern, abgestützt.

Ausführungsbeispiele der Erfindung werden nun unter Bezugnahme auf die Zeichnung erläutert. In dieser zeigen:
Die Fig. 1, 2 und 3 in Schrägansicht bzw. in zwei zueinander senkrechten Vertikalschnitten längs der Linien II-II bzw. III-III in Fig. 1 ein quaderförmiges Bodenelement eines erfindungsgemäßen Filterbodens,
Fig. 4 einen Teil eines Filterbodens mit Bodenelementen nach Fig. 1 in Schrägansicht und die
Fig. 5 und 6 schematische Draufsichten auf Filterböden mit Bodenelementen anderer Umrißform.

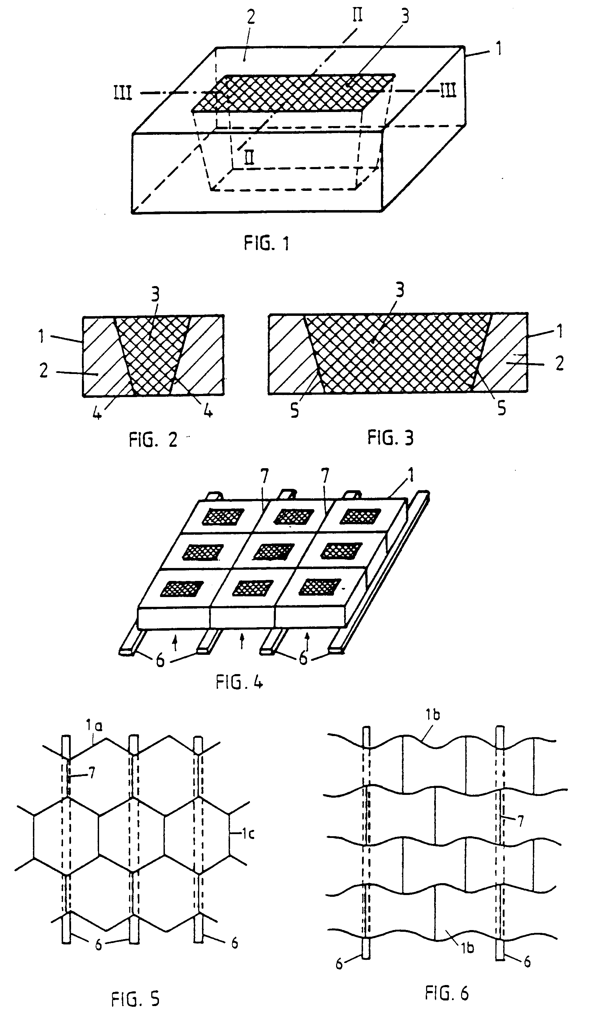

Das Bodenelement 1 nach den Fig. 1 bis 3 besteht aus einem rahmenartigen Stütz- und Hüllkörper 2 aus nicht porösem Beton, Kunststoff od.dgl., dessen Rahmenöffnung mit porösem Material 3, wie Sickerbeton, verschäumter Kunststoff od.dgl., ausgefüllt ist, wobei die Porösität dieses Materials hinreichend groß gewählt sein muß, damit der aus solchen Bodenelementen zusammengesetzte Filterboden bei geringem Druckabfall vom Rohgas leicht durchströmt werden kann.

Die Innenwände 4 und 5 der Rahmenöffnung sind, wie die Fig. 1 bis 3 erkennen lassen, so abgeschrägt, daß sich die lichte Weite der Öffnung nach unten verjüngt. Dadurch wird die poröse Masse 3 von dem bei der Herstellung des Bodenelementes als Gußform für das Rohmaterial dienenden Rahmenkörper 1 nach Erstarren des Rohmaterials gut festgehalten.

Je nach der Größe des gewünschten Filterbodens werden, wie Fig. 4 zeigt, Bodenelemente nach Fig. 1 in entsprechender Anzahl schachbrettartig aneinandergereiht und längs Stoßfugen 7 durch eine Tragkonstruktion, z.B. in Form von Betonträgern 6, abgestützt.

Die Fig. 5 und 6 zeigen noch schematische Draufsichten auf Bodenelemente 1a mit einem regelmäßigen sechseckigen Umriß bzw. Bodenelemente 1b mit gewellten Seitenkanten, die sich ineinandergreifend zu einer geschlossenen Bodenfläche ergänzen und im Bereich von Stoßfugen 7 längsweise auf einer Tragkonstruktion 6 in Form von parallelen Trägern aus Stahl oder Beton aufruhen.

## Patentansprüche

1. Filterboden für eine Biofilteranlage, der aus einer Mehrzahl von eine geschlossene Bodenfläche bildenden und von einer Tragkonstruktion (6) abgestützten gasdurchlässigen Bodenelementen (1, 1a, 1b) zusammengesetzt ist, dadurch gekennzeichnet, daß die Bodenelemente (1, 1a, 1b) aus rahmenartigen, bodenlosen, gegebenenfalls mit einer Stahlarmierung versehenen, unporösen Stütz- und Hüllkörpern (2) aus Beton oder Kunststoff bestehen, deren Rahmenöffnungen in Richtung senkrecht zum Filterboden von oben nach unten verjüngt sind und poröses Material (3), wie Sickerbeton oder porösen Kunststoff, in Anlage umgeben und festhalten.

2. Filterboden nach Anspruch 1, dadurch gekennzeichnet, daß die Bodenelemente (1, 1a, 1b) längs ihrer Stoßfugen (7) auf der Tragkonstruktion (6), vorzugsweise auf Stahl- oder Betonträgern, aufliegen.

## Claims

1. Filter floor for a biofilter plant, comprised of a plurality of gas-permeable floor elements (1, 1a, 1b) forming a closed floor plane and supported by a supporting structure (6), characterised in that the floor elements (1, 1a, 1b) are comprised of frame-like, bottomless, non-porous supporting and enveloping bodies (2) of concrete or synthetic material and eventually reinforced with steel, the frame openings of which are tapered in a direction perpendicular to the filter floor from the top to the bottom and surround and hold porous material (3), like filtering concrete or porous synthetic material, in adjacent contact.

2. Filter floor according to claim 1, characterised in that the floor elements (1, 1a, 1b) rest along their cross joints (7) on the supporting structure (6), preferably on steel or concrete supports.

## Revendications

1. Fond de filtrage pour une installation de filtration biologique, constitué d'une pluralité des éléments de fond (1, 1a, 1b) perméables a gaz, formants une plaine de fond fermée, et supportés par une structure de support (6), characterisé en ce que les éléments de fond (1, 1a, 1b) sont constitués des corps de support et d'enveloppe (2) non-poreux, du type cadre et sans fond, en béton ou en matière synthetique, et eventuellement armés d'acier, les ouvertures cadre desquelles sont diminuées dans une direction perpendiculaire au fond filtrage d'en haut vers le bas et entourent et tiennent une matière poreuse (3), comme béton filtrant ou matière synthetique poreuse, en contact adjacent.

2. Fond de filtrage selon la revendication 1, characterisé en ce que les éléments de fond (1, 1a, 1b) reposent le long de leurs joints de bout (7) sur la structure de support (6), de préférence sur des supports en acier ou en béton.
